# EUROPÄISCHE PATENTSCHRIFT

(11) **EP 1 621 781 B1**
(45) Veröffentlichungstag und Bekanntmachung des Hinweises auf die Patenterteilung: **04.02.2009**
(21) Anmeldenummer: 05106838.5
(22) Anmeldetag: 26.07.2005
(51) Int. Cl.: F16B 7/04, F16B 2/06

(54) **Befestigungsvorrichtung für ein Trägerprofil**
Fastening device for a profile
Dispositif de fixation pour profilé

(30) Priorität: 26.07.2004 DE 102004036178
(43) Veröffentlichungstag der Anmeldung: 01.02.2006
(73) Patentinhaber: HILTI Aktiengesellschaft, 9494 Schaan (LI)
(72) Erfinder: Hoffmann, Armin, 86899 Landsberg (DE)
(74) Vertreter: Wildi, Roland

(56) Entgegenhaltungen:
- DE-A1- 2 341 618
- US-A- 2 805 877
- PATENT ABSTRACTS OF JAPAN Bd. 2000, Nr. 09, 13. Oktober 2000 (2000-10-13) -& JP 2000 161317 A (UNIPRES CORP), 13. Juni 2000 (2000-06-13)

## Beschreibung

### Technisches Gebiet

Die Erfindung betrifft eine Befestigungsvorrichtung zur Festlegung eines Trägerprofils an einem Stangenelement mit einem U-förmigen Klammerelement, das zwei Schenkel sowie einen die beiden Schenkel verbindenden Verbindungsabschnitt aufweist, und mit einem an dem Verbindungsabschnitt des Klammerelementes vorgesehenes Spannelement. In den freien Endbereichen der Schenkel sind Anschläge für das Stangenelement vorgesehen. Das Spannelement weist eine erste, zu den Anschlägen verstellbare Spannfläche auf. An dem Verbindungsabschnitt ist ein in Richtung der Anschläge wirkendes Federelement vorgesehen.

### Stand der Technik

Zur Befestigung eines Leitungsstrangs, wie z. B. eines Rechteck-Lüftungskanals an einer Decke wird dieser beispielsweise mit zwei Gewindestangen und einem als Auflager dienenden Trägerprofil in einem bestimmten Abstand abgehängt. Die Gewindestangen werden üblicherweise mit Dübeln in der Decke verankert. Nachdem das abzuhängende Segment des Leitungsstrangs zwischen die Gewindestangen gehoben wurde, wird das mit Langlöchern versehene Trägerprofil über die freien Enden der Gewindestangen geschoben, in dem gewünschten Abstand zur Decke ausgerichtet und mittels Unterlegscheiben sowie Muttern in der ausgerichteten Position fixiert. Diese Art der Montage erfordert eine Mehrzahl von Personen und ist sehr zeitaufwändig, da beispielsweise die Muttern bei jeder Abhängung umständlich auf die Gewindestangen aufgedreht werden müssen. Zudem kann es vorkommen, dass die Langlöcher an dem Tragprofil nicht genau mit dem Abstand der Gewindestangen zueinander übereinstimmen und bei der Befestigung des Trägerprofils die Gewindestangen verbogen werden.

Aus der DE 31 49 747 A1 ist eine Befestigungsvorrichtung zur Fixierung von Stangenelementen an einem Winkel- oder T-Profil bekannt, die ein U-förmiges Klammerelement, das zwei Schenkel sowie einen die beiden Schenkel verbindenden Verbindungsabschnitt aufweist, und ein an dem Verbindungsabschnitt angeordnetes Spannelement umfasst. In den freien Endbereichen der Schenkel ist jeweils ein nach einer Seitenkante hin offene und parallel zum Schenkel verlaufender Schlitz als Anschlag für das Stangenelement vorgesehen. Mittels einer als Spannelement dienende Schraube, ist das Stangenelement mit dem Winkel-oder T-Profil verspannbar.

Die bekannte Befestigungsvorrichtung ist bei einer horizontalen Ausrichtung des Stangenelementes flexibel und einfach anwendbar. Nachteilig an der bekannten Lösung ist, dass bei einer Festlegung der Winkel- oder T-Profile an vertikal ausgerichteten Stangenelementen die Profile nur mittels einer aufwändigen Montage an den vertikal ausgerichteten Stangenelementen festlegbar sind.

Aus der US 2,805,877 ist eine Befestigungsvorrichtung zur Festlegung eines Trägerprofils an einem Stangenelement mit einem U-förmigen Klammerelement, das zwei Schenkel sowie einen die beiden Schenkel verbindenden Verbindungsabschnitt aufweist, wobei in den freien Endbereichen der Schenkel Anschläge für das Stangenelement vorgesehen sind, und mit einem an dem Verbindungsabschnitt des Klammerelementes vorgesehenen Spannelement bekannt, das über einen Klemmblock mit einer ersten, zu den Anschlägen verstellbaren Spannfläche auf das Trägerprofil einwirkt. An dem Verbindungsabschnitt ist ein in Richtung der Anschläge wirkendes Federelement vorgesehen, das in einer zurückgezogenen Stellung des Klemmblocks auf diesen wirkt.

Aus der DE 23 41 618 A1 ist eine Befestigungsvorrichtung zur Festlegung eines Kabels oder Rohres an einem Trägerprofil mit einem U-förmigen Klammerelement, das zwei Schenkel sowie einen die beiden Schenkel verbindenden Verbindungsabschnitt aufweist, wobei in den freien Endbereichen der Schenkel Anschläge zum Umfassen des Trägerprofils vorgesehen sind, und mit einem an dem Verbindungsabschnitt des Klammerelementes vorgesehenen Spannelement sowie mit einer mit dem festzulegenden Kabel oder Rohr in Anlage bringbaren Druckwanne bekannt. An dem freien Ende des Spannelementes ist eine napfförmige Scheibe vorgesehen, an der sich ein in Richtung der Anschläge und auf die Druckwanne wirkendes Federelement abstützt.

### Darstellung der Erfindung

Aufgabe der Erfindung ist es, eine Befestigungsvorrichtung zu schaffen, die unabhängig von der Ausrichtung des Stangenelementes eine einfache und schnelle Fixierung eines Trägerprofils an dem Stangenelement ermöglicht.

Die Aufgabe ist durch die Merkmale des unabhängigen Anspruchs gelöst. Vorteilhafte Weiterbildungen sind in den Unteransprüchen dargelegt.

Gemäss der Erfindung bildet das Federelement eine zweite Spannfläche aus, die in Richtung der Anschläge der ersten, von dem Spannelement gebildeten Spannfläche vorgelagert ist und beide Spannflächen sind mit dem Trägerprofil in Kontakt bringbar..

Das U-förmige Klammerelement bildet mit seinen Schenkeln eine Aufnahme für das festzulegende Trägerprofil und kann über dasselbe geschoben werden. Das Federelement ist vorteilhaft parallel und mittig zwischen den Schenkeln an der Innenseite des Verbindungsabschnitts angeordnet. Mittels Druck auf die Aussenseite des Verbindungsabschnitts wird das Federelement soweit zusammengedrückt, dass die Anschläge in den freien Endbereichen der Schenkel des Klammerelementes eine ausreichend grosse Öffnung zur Aufnahme des Stangenelementes ausbilden. Wird das Klammerelement entlastet, dehnt sich das Federelement aus und das festzulegende Trägerprofil ist an dem Stangenelement gehalten. Mit der erfindungsgemässen Befestigungsvorrichtung lassen sich unterschiedliche Formen von Trägerprofilen einfach, flexibel und unabhängig von der Ausrichtung des Stangenelementes an diesem festlegen. Das Stangenelement weist beispielsweise einen runden Querschnitt auf, wie ein Rundstab mit oder ohne Profilierung beziehungsweise wie eine Gewindestange. Die Anschläge in den freien Endbereichen der Schenkel können beispielsweise eine runde, ovale, rechteckige oder polygonale Kontur aufweisen, um die Festlegung von Trägerprofile an Stangenelementen zu ermöglichen, die beispielsweise einen runden, ovalen, rechteckigen oder polygonalen Querschnitt aufweisen. Die Ausgestaltung der Anschläge für das Stangenelement müssen nicht zwingend komplementär zu der Ausgestaltung des Querschnitts des Stangenelementes ausgebildet sein.

Die erste, zu den Anschlägen verstellbare Spannfläche bildet beispielsweise einen Montageanschlag, wobei die zweite Spannfläche mit der ersten Spannfläche in Deckung bringbar ist. Bei der Entlastung des Klammerelementes verschiebt sich infolge der Ausdehnung des Federelementes die zweite Spannfläche erneut in Richtung der Anschläge, so dass die zweite Spannfläche wieder in Richtung der Anschläge der ersten Spannfläche vorgelagert ist.

Vorzugsweise ist das Federelement als Schraubenfeder und entsprechend den Anforderungen, z. B. an die Elastizität, der Federkennlinie oder der Materialeigenschaften, ausgebildet. Das Federelement ist vorteilhaft fest, z. B. über eine Klemmung oder Verlötung an dem Verbindungsabschnitt befestigt. Beispielsweise sind an dem Verbindungsabschnitt ein Kragen oder mehrere Kragenabschnitte vorgesehen, an denen das Federelement klemmend festlegbar ist.

Bevorzugt ist das Spannelement als ein anziehbares Schraubmittel in Form einer Schraube ausgebildet. An dem Verbindungsabschnitt des Klammerelementes ist beispielsweise ein Gewinde vorgesehen, in welches die Schraube eingreift. Durch Anziehen der Schraube wird das festzulegende Trägerprofil mit dem Stangen element verspannt beziehungsweise verklemmt. Vorteilhaft ist die Bohrung mit einem umlaufenden, nach aussen gerichteten Kragen versehen, in welchem das Innengewinde der Bohrung zur Vergrösserung des Gewindeangriffs weitergeführt ist.

In einer alternativen Ausführungsform ist das Spannelement als Keil ausgebildet, der z. B. in Längsrichtung des festzulegenden Trägerprofils zwischen der Aussenseite des Trägerprofils und der Innenseite des Verbindungsabschnitts des Klammerelementes einschiebbar ist. Beispielsweise mittels Hammerschlägen wird die Befestigungsvorrichtung verspannt. Vorteilhaft sind bei einer solchen alternativen Ausführungsform der Befestigungsvorrichtung zwei gegeneinander ausgerichtete Keile als Spannelemente vorgesehen.

Vorzugsweise ist das Federelement um einen Abschnitt des Schraubmittels herum angeordnet. Bei einer vorteilhaften Ausführung der Spanneinrichtung mit einer anziehbaren Schraube und mit einer Schraubenfeder umgibt die Schraubenfeder zumindest teilweise den Schraubenschaft. Somit liegen die beiden Kraftangriffspunkte des Federelementes und des Spannelementes im Wesentlichen innerhalb eines gemeinsamen Bereichs. In einer alternativen Ausführungsform ist das Federelement ebenfalls als Schraubenfeder ausgebildet, die jedoch am Schaft des anziehbaren Schraubmittels festgelegt und um diesen herum angeordnet ist.

Bevorzugt ist der Anschlag in dem Endbereich des Schenkels als seitlich geöffneter Schlitz ausgebildet, was ein seitliches Einführen des Stangenelementes und somit eine einfache Montage des festzulegenden Trägerprofils auch an langen Stangen elementen in einem verhältnismässig kurzen Abstand zur Decke ermöglicht. Mit einer solchen Befestigungsvorrichtung muss das Klammerelement nicht wie bei einer Befestigungsvorrichtung, bei welcher der Anschlag beispielsweise ein Abschnitt einer umfänglich geschlossenen Öffnung ist, von unten her über das freie Ende des befestigten Stangenelementes geschoben werden, sondern kann direkt auf der gewünschten Position zur Decke an dem Stangenelement angeordnet werden. Zudem kann mit dieser Befestigungsvorrichtung auch eine Zwischenebene an einer bereits mit einem Trägerprofil versehenen Anordnung eines Leitungsstrangs zwischen diesem und der Decke erstellt werden.

Vorzugsweise ist zumindest bereichsweise ein Reibelement an dem Anschlag vorgesehen, womit der Reibschluss zwischen der Kontaktfläche des Anschlags mit dem Stangenelement verbessert wird. Die Anordnung eines Reibelementes ist insbesondere bei Stangenelementen mit einer leicht profilierten oder glatten Oberfläche vorteilhaft.

In einer alternativen, erfindungsgemässen Ausführung der Befestigungsvorrichtung ist zumindest bereichsweise ein Halbgewinde an dem Anschlag ausgebildet, womit, insbesondere zur Festlegung des Trägerprofils an einer Gewindestange ein Formschluss zwischen der Kontaktfläche des Anschlags mit dem Stangenelement geschaffen wird.

Bevorzugt ist bereichsweise ein vorstehender Kragenabschnitt im Bereich des Anschlags an dem Schenkel des Klammerelementes vorgesehen, womit eine grössere Kontaktfläche zwischen dem Anschlag und dem Stangenelement zur Verfügung steht und somit höhere Lasten übernommen werden können. Der Kragenabschnitt kann nach innen oder nach aussen gerichtet an dem Schenkel angeordnet sein, wobei die Anordnung des Kragenabschnitts an der Aussenseite des Schenkels vorteilhafter ist, da die Kragenabschnitte die Anordnung des Klammerelementes an dem Tragprofil nicht behindern.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von zwei Ausführungsbeispiele näher erläutert. Es zeigen:
- Fig. 1: Die erfindungsgemässe Befestigungsvorrichtung in einer Seitenansicht;
- Fig. 2: die Befestigungsvorrichtung gemäss den Fig. 1 in Draufsicht;
- Fig. 3a-c: die erfindungsgemässe Befestigungsvorrichtung beim Einführen des Stangenelementes, im provisorischen Klemmzustand und im verspannten Zustand jeweils in einer Seitenansicht; und
- Fig. 4: eine zweite Ausführungsform der erfindungsgemässen Befestigungsvorrichtung in Draufsicht.

Grundsätzlich sind in den Figuren gleiche Teile mit den gleichen Bezugszeichen versehen.

### Wege zur Ausführung der Erfindung

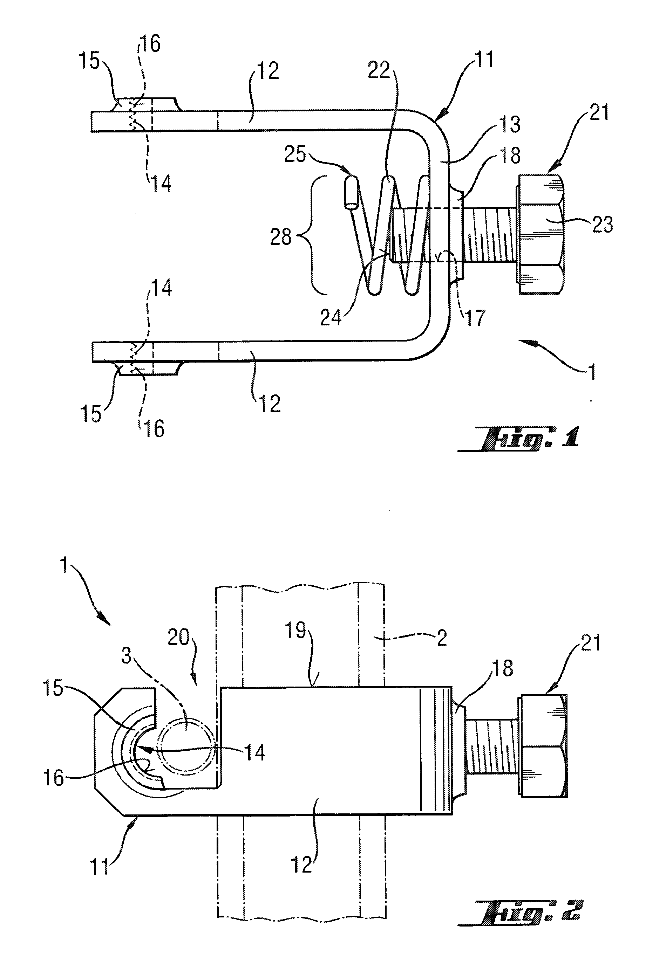

Die in den Fig. 1 und Fig. 2 dargestellte erfindungsgemässe Befestigungsvorrichtung 1 zur Fixierung eines Trägerprofils 2 an einem Stangenelement 3 weist ein U-förmiges Klammerelement 11, ein Spannelement 21 und ein Federelement 25 auf. Zur Verdeutlichung der Erfindung sind in der Fig. 2 das Trägerprofil 2 und das Stangenelement 3 strichpunktiert dargestellt. Das U-förmige Klammerelement 11 weist zwei Schenkel 12 sowie einen die beiden Schenkel 12 verbindenden Verbindungsabschnitt 13 auf. In den freien Endbereichen der Schenkel 12 ist jeweils ein Anschlag 14 für das Stangenelement 3 vorgesehen. Entlang der Anschläge 14 ist jeweils ein, nach aussen gerichteter Kragenabschnitt 15 vorgesehen, der die zur Verfügung stehende Kontaktfläche zwischen dem Schenkel 12 und dem Stangenelement 3 vergrössert. Im Bereich des Kragenabschnitts 15 ist an diesem und an dem Anschlag 14 ein Halbgewinde 16 ausgebildet. Wie insbesondere aus der Fig. 2 ersichtlich, ist der Anschlag 14 in den Endbereichen der Schenkel 12 seitlich in Richtung der Seitenkante 19 der Schenkel 12 offen ausgebildet, so dass ein von der Seite her zugänglicher Schlitz 20 ausgebildet ist, in den das Stangenelement 3 einführbar ist beziehungsweise der eine seitliche Montage des U-förmigen Klammerelementes 11 an dem Stangenelement 3 ermöglicht.

Das Spannelement 21 ist ein anziehbares Schraubmittel 23, in Form einer Schraube, wobei das freie Ende 24 des anziehbaren Schraubmittels 23 eine erste, zu den Anschlägen 14 verstellbare Spannfläche ausbildet. An dem Verbindungsabschnitt 13 ist eine Bohrung 17 mit einem Innengewinde ausgebildet, in welches das anziehbare Schraubmittel 23 eingreift. Zur Vergrösserung des Gewindeangriffs ist die Bohrung 17 mit einem umlaufenden, nach aussen gerichteten Kragen 18 versehen, in welchem das Innengewinde der Bohrung 17 weitergeführt ist.

Das in Richtung der Anschläge 14 wirkende Federelement 25 ist als eine Schraubenfeder 22 ausgebildet, die zwischen den Schenkeln 12 an der Innenseite des Verbindungsabschnitts 13 festgelegt ist. Das Federelement 25 bildet an seinem freien Endbereich 28 eine zweite Spannfläche aus, die in Richtung der Anschläge 14 der ersten, von dem freien Ende 24 des anziehbaren Schraubmittels 23 vorgelagert ist.

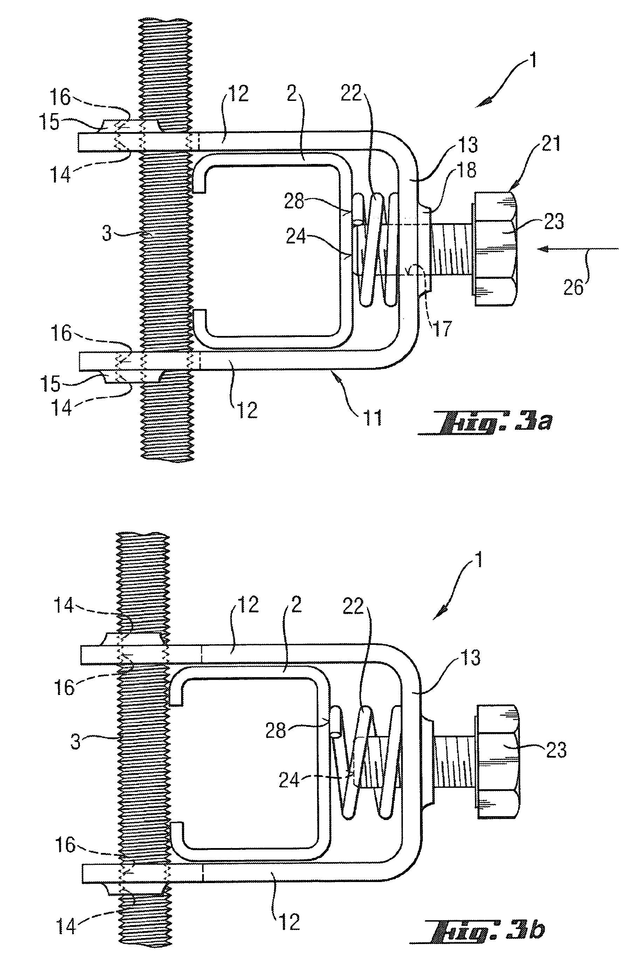

Nachfolgend wird anhand der Fig. 3a-c der Montagevorgang zur Festlegung des Trägerprofils 2 in drei Zuständen gezeigt. An den zuvor an einer Decke befestigten Stangenelementen 3, hier Gewindestangen, soll zur Schaffung eines zur Decke beabstandeten Auflagers das Trägerprofil 2, hier eine C-förmige Schiene, an den Stangenelementen 3 festgelegt werden. Zwei Befestigungsvorrichtungen 1 werden zueinander beabstandet über das festzulegende Trägerprofil 2 geschoben, so dass das Trägerprofil 2 in die von den Schenkeln 12 und dem Verbindungsabschnitt 13 des U-förmigen Klammerelementes 11 geschaffene Aufnahme zu liegen kommt.

Wie insbesondere in der Fig. 3a dargestellt und aus der Fig. 2 ersichtlich ist, wird das Trägerprofil 2 mit den Klammerelementen 11 ungefähr auf die gewünschte Höhe gehoben. Durch Ausübung von Druck auf die Aussenseite des Verbindungsabschnitts 13 beziehungsweise auf das anziehbare Schraubmittel 23 in Richtung des Pfeils 26 wird die Schraubenfeder 22 zusammengedrückt und die Anschläge 14 in den Schenkeln 12 des Klammerelementes 11 werden derart über den Rand des Trägerprofils 2 geschoben, dass das Klammerelement 11 das Stangenelement 3 aufnehmen kann. Die erste, zu den Anschlägen 14 verstellbare, von dem freien Ende 24 des anziehbaren Schraubmittels 23 gebildete Spannfläche bildet hierbei einen verstellbaren Montageanschlag, wobei die zweite Spannfläche mit der ersten Spannfläche in Deckung zu liegen kommt.

Wird das Klammerelement 11 entlastet, dehnt sich die Schraubenfeder 22, wie in Fig. 3b dargestellt, aus, wobei sich infolge der Ausdehnung der Schraubenfeder 22 die zweite Spannfläche erneut in Richtung der Anschläge 14 verschiebt, so dass die zweite Spannfläche wieder in Richtung der Anschläge 14 der ersten Spannfläche vorgelagert ist. Dabei kommt das an den Anschlägen 14 ausgebildete Halbgewinde 16 mit dem Gewinde an der Aussenseite des Stangenelementes 3 unter Bildung eines Formschlusses in Eingriff und das Trägerprofil 2 wird an das Stangenelement 3 gedrückt.

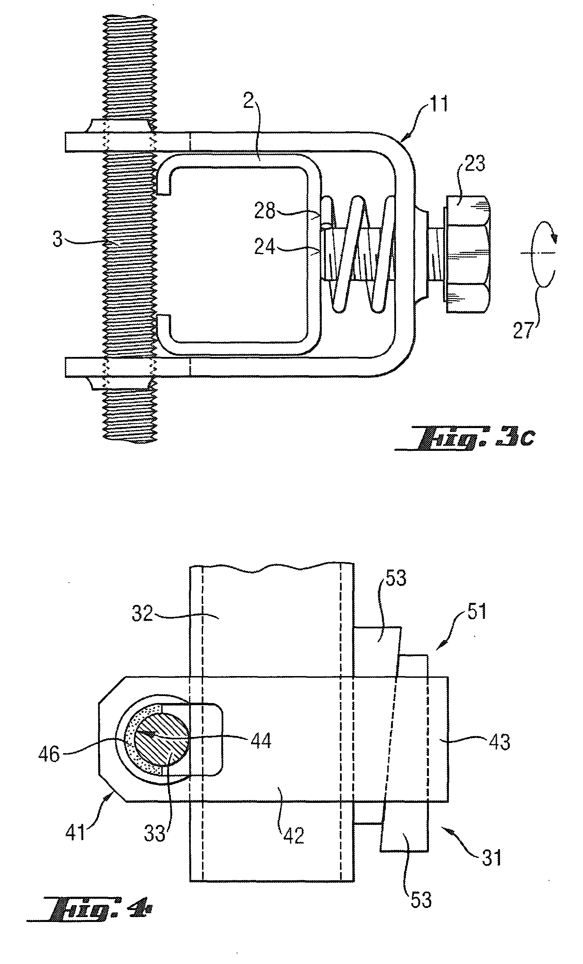

Wie in Fig. 3c dargestellt, wird mittels Verspannen des anziehbaren Schraubmittels 23 in Drehrichtung 27 die erste, von dem freien Ende 24 des anziehbaren Schraubmittels 23 gebildete Spannfläche vor die zweite, von dem freien Ende der Schraubenfeder 22 gebildete Spannfläche in Richtung der Anschläge 14 verschoben. Dabei wird das Trägerprofil 2 mit dem Stangenelement 3 verklemmt und die bereits geschaffene Befestigung zusätzlich gesichert, womit die Übertragung hoher Lasten über die erstellte Befestigung gewährleistet ist.

In Fig. 4 ist eine zweite Ausführungsform der erfindungsgemässen Befestigungseinrichtung 31 zur Festlegung eines Tragprofils 32 an einem Stangenelement 33 gezeigt, die ebenfalls ein U-förmiges Klammerelement 41, ein Spannelement 51 und ein Federelement (hier nicht dargestellt) umfasst. Die Anschläge 44 in den Endbereichen der Schenkel 42 sind als umfänglich geschlossene, in Längserstreckung der Schenkel 42 verlaufende Langlöcher ausgebildet. An den Durchführöffnungen beziehungsweise an den Anschlägen 44 ist bereichsweise ein Reibelement 46, z. B. aus Gummi vorgesehen, welches den Reibschluss zwischen dem Anschlag 44 beziehungsweise des Schenkels 42 und dem Stangenelement 33, das hier als glatter Rundstab ausgebildet ist, verbessert.

Das Spannelement 51 ist anstelle eines anziehbaren Schraubmittels als zueinander verschiebbare Keile 53 ausgebildet, die zwischen der Innenseite des Verbindungsabschnitts 43 und der, dem Verbindungsabschnitt 43 zugewandte Aussenseite des Trägerprofils 32 angeordnet sind. Das ebenfalls an dem Verbindungsabschnitt 43 angeordnete Federelement ist in dieser Darstellung durch den Schenkel 42 des Klammerelementes 41 verdeckt und deshalb nicht dargestellt.

## Patentansprüche

1. Befestigungsvorrichtung zur Festlegung eines Trägerprofils (2; 32) an einem Stangenelement (3; 33) mit einem U-förmigen Klammerelement (11; 41), das zwei Schenkel (12; 42) sowie einen die beiden Schenkel (12; 42) verbindenden Verbindungsabschnitt (13; 43) aufweist, wobei in den freien Endbereichen der Schenkel (12; 42) Anschläge (14; 44) für das Stangenelement (3; 33) vorgesehen sind, und mit einem an dem Verbindungsabschnitt (13; 43) des Klammerelementes (11; 41) vorgesehenen Spannelement (21; 51) mit einer ersten, zu den Anschlägen (14; 44) verstellbaren Spannfläche (24), wobei ein in Richtung der Anschläge (14; 44) wirkendes Federelement (25) an dem Verbindungsabschnitt (13; 43) vorgesehen ist,
**dadurch gekennzeichnet, dass** das Federelement (25) eine zweite Spannfläche (28) ausbildet, die in Richtung der Anschläge (14; 44) der ersten Spannfläche vorgelagert ist, und dass beide Spannflächen (24; 28) mit dem Trägerprofil (2; 32) in Kontakt bringbar sind.

2. Befestigungsvorrichtung nach Anspruch 1, **dadurch gekennzeichnet, dass** das Federelement (25) als Schraubenfeder (22) ausgebildet ist.

3. Befestigungsvorrichtung nach Anspruch 1 oder 2, **dadurch gekennzeichnet, dass** das Spannelement (21) als ein anziehbares Schraubmittel (23) ausgebildet ist.

4. Befestigungsvorrichtung nach Anspruch 1 oder 2, **dadurch gekennzeichnet, dass** das Spannelement (51) zumindest einen Keil (53) aufweist.

5. Befestigungsvorrichtung nach Anspruch 3, **dadurch gekennzeichnet, dass** das Federelement (25) um einen Abschnitt des Schraubmittels (23) herum angeordnet ist.

6. Befestigungsvorrichtung nach einem der Ansprüche 1 bis 5, **dadurch gekennzeichnet, dass** der Anschlag (14) in dem Endbereich des Schenkels (12) als seitlich geöffneter Schlitz (20) ausgebildet ist.

7. Befestigungsvorrichtung nach einem der Ansprüche 1 bis 6, **dadurch gekennzeichnet, dass** zumindest bereichsweise ein Reibelement (46) an dem Anschlag (44) vorgesehen ist.

8. Befestigungsvorrichtung nach einem der Ansprüche 1 bis 7, **dadurch gekennzeichnet, dass** zumindest bereichsweise ein Halbgewinde (16) an dem Anschlag (14) ausgebildet ist.

9. Befestigungsvorrichtung nach einem der Ansprüche 1 bis 8, **dadurch gekennzeichnet, dass** bereichsweise ein vorstehender Kragenabschnitt (15) im Bereich des Anschlags (14) an dem Schenkel (12) des Klammerelementes (11) vorgesehen ist.

## Claims

1. Fastening device for securing a mounting profile (2; 32) in position on a bar member (3; 33), having a U-shaped clamping member (11; 41) which has two limbs (12; 42) and also a connecting section (13; 43) that connects the two limbs (12; 42), abutments (14; 44) being provided for the bar member (3; 33) in the free end regions of the limbs (12; 42); and having a load applying member (21; 51) provided on the connecting section (13; 43) of the clamping member (11; 41), the load applying member (21; 51) having a first load applying surface (24) displaceable relatively to the abutments (14; 44), a spring member (25) being provided on the connecting section (13; 43) which acts in the direction of the abutments (14; 44), **characterised in that** the spring member (25) forms a second load applying surface (28) which is carried forwardly of the first load applying surface as seen in the direction of the abutments (14; 44), and **in that** both load applying surfaces (24; 28) can be brought into contact with the mounting profile (2; 32).

2. Fastening device according to claim 1, **characterised in that** the spring member (25) is formed as a helical spring.

3. Fastening device according to claim 1 or 2, **characterised in that** the load applying member (21) is formed as a screw means ,(23) that can be tightened.

4. Fastening device according to claim 1 or 2, **characterised in that** the load applying member (51) has at least one wedge (53).

5. Fastening device according to claim 3, **characterised in that** the spring member (25) is arranged around a section of the screw means (23).

6. Fastening device according to one of claims 1 to 5, **characterised in that** the abutment (14) in the end region of the limb (12) is formed as a slot (20) open to the side.

7. Fastening device according to one of claims 1 to 6, **characterised in that** a friction element (46) is provided on the abutment (44), at least zonally.

8. Fastening device according to one of claims 1 to 7, **characterised in that** a threaded half section (16) is provided on the abutment (14), at least zonally.

9. Fastening device according to one of claims 1 to 8, **characterised in that** a protruding collar section (15) is provided zonally on the limb (12) of the clamping member (11) in the region of the abutment (14).

## Revendications

1. Dispositif de fixation pour fixer un profilé de support (2; 32) à un élément de barre (3; 33) avec un élément de bridage (11; 41) en forme de U qui présente deux branches (12; 42) ainsi qu'une section de liaison (13; 43) reliant les deux branches (12; 42), des butées (14; 44) pour l'élément de barre (3; 33) étant prévues dans les régions terminales libres des branches (12; 42), et avec un élément de serrage (21; 51) prévu sur la section de liaison (13; 43) de l'élément de bridage (11; 41) avec une première surface de serrage (24) pouvant être déplacée par rapport aux butées (14; 44), un élément de ressort (25) agissant en direction des butées (14; 44) étant prévu sur la section de liaison (13; 33), **caractérisé en ce que** l'élément de ressort (25) forme une deuxième surface de serrage (28) qui est placée avant la première surface de serrage en direction des butées (14; 44) et **en ce que** les deux surfaces de serrage (24; 28) peuvent être mises en contact avec le profilé de support (2; 32).

2. Dispositif de fixation selon la revendication 1, **caractérisé en ce que** l'élément de ressort (25) est formé comme un ressort à boudin (22).

3. Dispositif de fixation selon la revendication 1 ou 2, **caractérisé en ce que** l'élément de serrage (21) est formé comme un moyen fileté serrable (23).

4. Dispositif de fixation selon la revendication 1 ou 2, **caractérisé en ce que** l'élément de serrage (51) présente au moins un coin (53).

5. Dispositif de fixation selon la revendication 3, **caractérisé en ce que** l'élément de ressort (25) est disposé autour d'une section du moyen fileté (23).

6. Dispositif de fixation selon l'une quelconque des revendications 1 à 5, **caractérisé en ce que** la butée (14) est formée dans la région terminale de la branche (12) comme une fente (20) ouverte latéralement.

7. Dispositif de fixation selon l'une quelconque des revendications 1 à 6, **caractérisé en ce qu'**au moins localement un élément de friction (46) est prévu sur la butée (44).

8. Dispositif de fixation selon l'une quelconque des revendications 1 à 7, **caractérisé en ce qu'**au moins localement un demi filetage (16) est formé sur la butée (14).

9. Dispositif de fixation selon l'une quelconque des revendications 1 à 8, **caractérisé en ce que** localement une section de collet en saillie (15) est prévue sur la branche (12) de l'élément de serrage (11) dans la région de la butée (14).
